# FASCICULE DE BREVET EUROPEEN

(11) **EP 2 297 812 B1**
(45) Date de publication et mention de la délivrance du brevet: **01.04.2015**
(21) Numéro de dépôt: 09784204.1
(22) Date de dépôt: 11.06.2009
(51) Int. Cl.: H01M 4/505, H01M 10/052, H01M 10/0567, H01M 10/42, H01M 4/58

(54) **ELECTROLYTE NON-AQUEUX POUR ACCUMULATEUR AU LITHIUM A TENSION ELEVEE**
NICHT-WÄSSRIGER ELEKTROLYT FÜR HOCHSPANNUNGS-LITHIUMBATTERIE
NON-AQUEOUS ELECTROLYTE FOR A HIGH-VOLTAGE LITHIUM BATTERY

(30) Priorité: 25.06.2008 FR 0803565
(43) Date de publication de la demande: 23.03.2011
(73) Titulaire: Commissariat à l'Énergie Atomique et aux Énergies Alternatives, 75015 Paris (FR)
(72) Inventeur: PATOUX, Sébastien, F-38600 Fontaine (FR); BOURBON, Carole, F-38590 Saint Michel de Saint-Geoirs (FR); MARTINET, Sébastien, 38210 St Quentin sur Isère (FR); PAGANO, Carole, F-38330 Saint-ismier (FR); SANNIER, Lucas, F-62100 Calais (FR)
(74) Mandataire: Noel, Chantal Odile
(86) Numéro de dépôt international: PCT/FR2009/000697
(87) Numéro de publication internationale: WO 2010/007223

(56) Documents cités:
- EP-A- 1 320 143
- WO-A-2007/010915
- WO-A-2007/142121
- GB-A- 1 404 355
- JP-A- 1 030 178
- JP-A- 2002 100 400
- JP-A- 2005 243 543
- JP-A- 2005 322 610
- JP-A- 2006 066 320
- JP-A- 2006 252 895
- JP-A- 2007 172 947
- US-A- 5 296 319
- US-A1- 2004 170 903
- US-A1- 2006 115 739
- US-A1- 2007 196 740
- US-A1- 2008 020 276
- H. YAMANE ET AL.: "A causal study of the capacity fading of Li1.01Mn1.99O4 cathode at 80°C, and the suppressing substances of its fading" JOURNAL OF POWER SOURCES, vol. 99, no. 1-2, 1 août 2001 (2001-08-01), pages 60-65, XP004296397 ISSN: 0378-7753
- J. UFHEIL ET AL.: "Maleic anhydride as an additive to gamma-butyrolactone solutions for Li-ion batteries" ELECTROCHIMICA ACTA, vol. 50, no. 7-8, 15 février 2005 (2005-02-15), pages 1733-1738, XP004731065 ISSN: 0013-4686

## Description

La présente invention est relative à un couple électrode positive/électrolyte et à un accumulateur au lithium comprenant un tel couple.

Les accumulateurs au lithium (Li-ion) sont de plus en plus utilisés comme sources d'énergie autonome, en particulier dans les équipements portables (téléphones, ordinateurs, caméscopes, appareils photos, outillage,...) où ils remplacent progressivement les accumulateurs nickel-cadmium (Ni-Cd) et nickel-hydrure métallique (Ni-MH). Depuis plusieurs années, les ventes d'accumulateurs Li-ion dépassent celles des accumulateurs Ni-MH et Ni-Cd. Cette évolution s'explique par l'amélioration continue des performances des accumulateurs au lithium, leur conférant ainsi des densités d'énergie massiques et volumiques nettement supérieures à celles proposées par les filières Ni-Cd et Ni-MH. Alors que les premiers accumulateurs Li-ion possédaient une densité d'énergie d'environ 80-90 Wh/kg, des densités d'énergie de près de 200 Wh/kg sont désormais obtenues (densité d'énergie rapportée à la masse de la cellule Li-ion complète). A titre de comparaison, les accumulateurs Ni-MH possèdent une densité d'énergie maximale de 100 Wh/kg environ et les accumulateurs Ni-Cd ont une densité d'énergie de l'ordre de 50 Wh/kg.

Les nouvelles générations d'accumulateurs au lithium sont déjà en voie de développement pour des applications toujours plus diversifiées (automobile hybride ou tout électrique, stockage de l'énergie de cellules photovoltaïques,...). Afin de répondre aux demandes en potentiel de fonctionnement et en énergie (par unité de masse et/ou de volume) toujours plus importantes, des recherches ont été entreprises pour la mise au point de nouveaux matériaux d'électrodes d'accumulateurs Li-ion encore plus performants et d'électrolytes capables de fonctionner sur une large plage de potentiel.

Les composés actifs d'électrodes utilisés dans les accumulateurs Li-ion commerciaux sont, pour l'électrode positive, des composés lamellaires tels que LiCoO₂, LiNiO₂ et les mixtes Li(Ni,Co,Mn,Al)O₂ ou des composés de structure spinelle de composition LiMn₂O₄ et ses dérivés. L'électrode négative est généralement du carbone (graphite, coke,...) ou éventuellement l'oxyde spinelle Li₄Ti₅O₁₂ ou un métal formant un alliage avec le lithium (Sn, Si,...). Les capacités spécifiques théoriques et pratiques des composés d'électrode positive cités sont respectivement d'environ 275 mAh/g et 140 mAh/g pour les oxydes de structure lamellaire (LiCoO₂ et LiNiO₂) et 148 mAh/g et 120 mAh/g pour le spinelle LiMn₂O₄. Dans tous les cas une tension de fonctionnement, par rapport au lithium métallique, voisine de 4 Volts est obtenue.

Par ailleurs, il est connu que l'augmentation de la capacité et/ou l'élévation du potentiel rédox du matériau de l'électrode positive a un impact plus important sur l'augmentation de la densité d'énergie totale de l'accumulateur qu'une augmentation d'un même ordre à l'électrode négative.

Aussi au cours des dernières années, de nombreuses recherches ont été entreprises dans le but de proposer de nouveaux matériaux d'électrode positive à capacité de tensions élevées. Récemment, des matériaux d'électrode positive présentant une activité électrochimique à haute tension, au-delà de 4,2 V vs. Li⁺/Li ont été développés afin d'augmenter la densité d'énergie des accumulateurs au lithium et réduire éventuellement le nombre d'éléments à disposer en série dans les applications nécessitant une tension élevée. Parmi les nouveaux composés prometteurs, les orthophosphates LiCoPO₄ et LiNiPO₄, les oxydes spinelles de type LiNi_{0,5}Mn_{1,5}O₄ et LiNi_{0,4}Mn_{1,6}O₄, et les oxydes lamellaires de type Li(Mn,Co,Ni)O₂, Li₂MnO₃ Li(Mn,Co,Ni)O₂ et leurs dérivés peuvent être cités comme exemples de composés fonctionnant, au moins en partie, au dessus de 4,2 V vs. Li⁺/Li, voire même au-dessus de 4,5 V vs. Li⁺/Li. Dans le cas du composé LiCoPO₄ par exemple, l'activité électrochimique, correspondant à l'oxydation des ions Co²⁺ a lieu à 4,8 V vs. Li⁺/Li environ.

Les électrolytes conventionnels utilisés dans les accumulateurs Li-ion sont principalement composés d'un sel de lithium, par exemple choisi parmi LiClO₄, LiAsF₆, LiPF₆, LiBF₄, LiR_{F}SO₃, LiCH₃SO₃, LiN(R_{F}SO₂)₂, LiC(R_{F}SO₂)₃ (R_{F} étant choisi parmi un atome de fluor et un groupement perfluoroalkyle comportant entre un et huit atomes de carbone), lithium trifluorométhanesulfonylimide (LiTFSI), lithium bis(oxalato)borate (LIBOB), lithium bis(perfluoroéthylsulfonyl)imide (LiBETI), fluoroalkylphosphate de lithium (LiFAP), dissous dans un mélange de solvants organiques à base de carbonates cycliques et acycliques (par exemple, un mélange de carbonate d'éthylène et de carbonate de diméthyle). Un tel électrolyte possède une bonne conductivité ionique, souvent supérieure à 10⁻³ S/cm, et permet d'obtenir des performances électrochimiques convenables (durée de vie, autodécharge,...) dans une fenêtre de potentiel généralement comprise entre 0 et 4,2 V vs. Li⁺/Li. Outre les électrolytes liquides, il existe également des électrolytes polymères secs et des électrolytes gélifiés. Les premiers sont à base d'oxyde de polyéthylène ou de l'un de ses dérivés et nécessitent un fonctionnement à 80°C environ (soit au-dessus des températures d'utilisation habituelles des téléphones, ordinateurs et autres applications) afin de disposer d'une conductivité ionique suffisante. Les seconds sont constitués de polymères tels que le PVDF, le PEO, le PAN et le PVC imbibés d'un électrolyte liquide comme ceux décrits précédemment, et sont donc soumis, dans le meilleurs des cas, aux mêmes limitations de potentiel.

Cependant, dans des conditions de fonctionnement au-delà de 4,2 V vs. Li⁺/Li, ces électrolytes ne sont pas stables (oxydation partielle ou totale de l'électrolyte) et engendrent une autodécharge rapide de l'accumulateur lorsque ce dernier est partiellement ou totalement chargé, le phénomène s'accentuant particulièrement au-delà de 4,5 V vs Li⁺/Li. L'absence d'électrolyte capable d'opérer à haute tension est donc un frein au développement des accumulateurs au lithium de haute tension, donc de grandes densités d'énergie.

Il y a plusieurs années, il a été rapporté que certains solvants liquides de type sulfone, par exemple, étaient stables à tension élevée (XU et al., Electrochemical and Solid-State Letters, 5(1) : A26-A29, 2002). Néanmoins, ces solvants n'ont pas trouvé d'application pratique dans des accumulateurs au lithium, certainement du fait de leur réactivité (dégradation) à bas potentiel (inférieur à 1 V vs. Li⁺/Li), et de leur grande viscosité à température ambiante. En outre, leur stabilité à haute tension reste à démontrer en conditions d'utilisation réelles.

De même, il existe une classe d'électrolytes, les liquides ioniques, initialement considérés comme stables sur une large plage de tension, en particulier à tension élevée. Les liquides ioniques sont des sels fondus composés de cations organiques de grande taille et d'anions organiques ou inorganiques de taille plus modeste. Un sel de lithium, par exemple le LiBF₄, le LiPF₆, ou le LiTFSI, doit être ajouté à ces liquides pour une utilisation en batteries Li-ion. D'un point de vue pratique, les liquides ioniques actuels demeurent trop visqueux à température ambiante et l'ajout de solvants organiques est généralement nécessaire pour réduire la viscosité du milieu.

Il existe également des électrolytes polymères secs et des électrolytes gélifiés. Les premiers sont à base d'oxyde de polyéthylène ou de l'un de ses dérivés et nécessite un fonctionnement à 80°C environ (au-dessus des températures d'utilisation habituelle des téléphones, ordinateurs et autres applications) afin de disposer d'une conductivité ionique suffisante. Les seconds sont constitués de polymères tels que le PVDF, le PEO, le PAN et le PVC imbibés d'un électrolyte liquide comme ceux décrits précédemment, et sont donc soumis, dans le meilleur des cas, aux mêmes limitations en potentiel.

Plus particulièrement, ZHANG, Journal of Power Sources, 162 : 1379-1394, 2006, passe en revue différents additifs d'électrolyte présentant une ou plusieurs fonctions pour améliorer la performance des accumulateurs au lithium. Parmi ceux-ci, une catégorie est présentée brièvement qui permet de protéger l'électrode positive (cf. p. 1385-1386, paragraphe 3 « cathode protection agent »). Dans ce but, sont indiqués d'une part des composés amine (butylamine), imide (N,N'-dicyclohexylcarbodiimide) et amino-silane (N,N'-diéthylamino triméthylsilane) capables de réduire, soit les impuretés en eau et en acides présentes dans l'électrolyte et/ou l'électrode, soit la dissolution trop importante des ions métalliques issus principalement de l'électrode positive ou du collecteur de courant, et d'autre part des sels de lithium tel que le LiBOB en tant qu'additifs d'électrolyte capables de former un film protecteur à la surface de la cathode. Toutefois, ce document est muet quant à la stabilité de ces additifs et leur capacité à réduire le problème d'autodécharge à des tensions élevées, supérieures à 4,2 V vs. Li⁺/Li.

La demande de brevet JP 2006252895 décrit un accumulateur au lithium dont l'électrode positive est un oxyde composite incluant du lithium et du manganèse, ayant une structure spinelle, de formule LiMn₂O₄ et dans lequel l'électrolyte contient un anhydride succinique.

Cependant, ce couple électrode positive/électrolyte n'est pas un couple capable de fonctionner au-delà de 4,2 V vs. Li⁺/Li dans des conditions de fonctionnement stables à haute tension.

La demande de brevet US 2004/170903 décrit également une batterie au lithium dont l'électrode positive est du type spinelle LiMn₂O₄ et un électrolyte comprenant un anhydride carboxylique.

Mais là encore, ce couple électrode positive et anhydride carboxylique n'est pas capable de fonctionner au-delà de 4,2 V vs. Li⁺/Li environ dans des conditions de fonctionnement stables à haute tension.

La demande de brevet JP 2006066320 et la demande de brevet US 2007/196740 décrivent une pile au lithium dont l'électrolyte peut, en particulier contenir un anhydride d'acide carboxylique et l'électrode positive est un oxyde mixte de manganèse de lithium et d'un autre métal parmi lesquels le nickel, de structure spinelle.

Ces documents ne décrivent pas le couple précis électrode positive/électrolyte selon l'invention.

Il en est de même de la demande de brevet US 2006/115 739, du brevet US 5,296,319, de la demande de brevet US 2008/020276, de la demande internationale WO 2007/142121, de la demande de brevet JP 2007/172947 et de la demande de brevet JP 2005322610 qui toutes décrivent des piles au lithium dont l'électrolyte peut contenir un anhydride d'acide carboxylique et dont l'électrode positive peut être un oxyde mixte de lithium et de manganèse de structure spinelle.

La demande internationale WO 2007/019115 décrit un accumulateur au lithium dans lequel l'électrolyte contient un anhydride d'acide maléique mais pas en combinaison avec une électrode positive en un oxyde mixte de lithium, de nickel et de manganèse de structure spinelle.

Il en est de même du document J. UFHEIL et al. "Maleic anhydride as an additive to gamma-butyrolactone solutions for Li-ion batteries", Electrochimica Acta, vol. 50, no. 7-8, 15 février 2005 (2005-02-15), pages 1733-1738, XP004731065.

La demande de brevet EP 1 320 143 décrit une batterie au lithium dont l'électrolyte contient un anhydride d'acide carboxylique et l'électrode positive est un complexe d'oxyde de lithium, de nickel et de manganèse, mais pas de structure spinelle.

La demande de brevet JP 2002100400 décrit un accumulateur au lithium dont l'électrolyte contient un anhydride d'acide carboxylique et l'électrode positive peut être un oxyde mixte de lithium et de manganèse, de structure spinelle, mais ne contenant pas de nickel.

Il s'avère donc que les recherches effectuées ces dernières années permettent d'ores et déjà d'obtenir une différence de potentiel élevée entre les deux électrodes (un matériau d'électrode négative opérant à basse tension et un matériau d'électrode positive opérant à haute tension). Mais, à ce jour, il n'existe aucun électrolyte d'accumulateur au lithium véritablement stable et capable de fonctionner, au-delà de 4,2 V vs. Li⁺/Li environ, et en particulier entre 4,2 et 4,5 V vs. Li⁺/Li, dans des conditions de fonctionnement habituelles. Plus précisément l'interface électrode positive / électrolyte est instable à haute tension et engendre de ce fait une autodécharge rapide lorsque l'accumulateur est stocké à haute tension. L'autodécharge est un paramètre extrêmement important puisqu'il correspond à la perte d'énergie d'un accumulateur après une période de stockage plus ou moins longue, donc à une énergie encore disponible moindre.

Dès lors, le but de l'invention est de fournir un couple électrode positive/électrolyte d'accumulateur au lithium utilisable pour fonctionner sur une plage de potentiel au-delà de 4,2V vs. Li⁺/Li, au moins, afin de réduire l'autodécharge de cet accumulateur haute tension.

A cet effet, l'invention propose un couple électrode positive/électrolyte caractérisé en ce que l'électrode positive est en un matériau de structure spinelle de formule (I) suivante et a un paramètre de maille compris entre 8,167 et 8,190 A :

Li_{y}Ni_{0,5-x}Mn_{1,5+x}O_{4-δ} Formule (I)

dans laquelle :
0,9 <y ≤ 1,1 ;
0 ≤ x ≤ 0,1 ; et
δ ≥ 0,
et en ce que l'électrolyte est une solution d'un sel de lithium comprenant au moins un premier additif choisi parmi l'anhydride butane-1,4-dicarboxylique et l'anhydride 2-méthylène butane-1,4-dicarboxylique.

Dans ce couple, de préférence, la teneur totale en additif (s) de l'électrolyte est supérieure ou égale à 0,01% en masse et inférieure ou égale à 30% en masse, par rapport à la masse totale d'électrolyte.

Plus préférablement, la teneur totale en additif(s) de l'électrolyte est supérieure à 1% en masse et inférieure ou égale à 15% en masse, par rapport à la masse totale d'électrolyte.

Le plus préférablement, la teneur totale en additif(s) de l'électrolyte est de 10% en masse par rapport à la masse totale d'électrolyte.

Selon un mode de réalisation préféré de la présent invention, l'electrolyte comprend, en outre, un second additif.

Le second additif de l'électrolyte, lorsque présent, est de préférence le bis(oxalato)borate de lithium (LiBOB) de formule LiBC₄O₈.

Par ailleurs, de préférence, dans le couple de l'invention, l'électrode positive est en un matériau de structure spinelle de formule (I) qui a un paramètre de maille compris entre 8,179 et 8,183 Å.

Plus préférablement, dans le couple de l'invention, l'électrode positive est en un matériau de structure spinelle de formule LiNi_{0,4}Mn_{1,6}O₄.

L'invention propose également un accumulateur au lithium qui comprend un couple électrode positive/électrolyte selon l'invention.

L'invention sera mieux comprise et d'autres avantages et caractéristiques de celle-ci apparaitront plus clairement à la lecture de la description explicative qui suit et qui est faite en références aux figures annexées dans lesquelles :

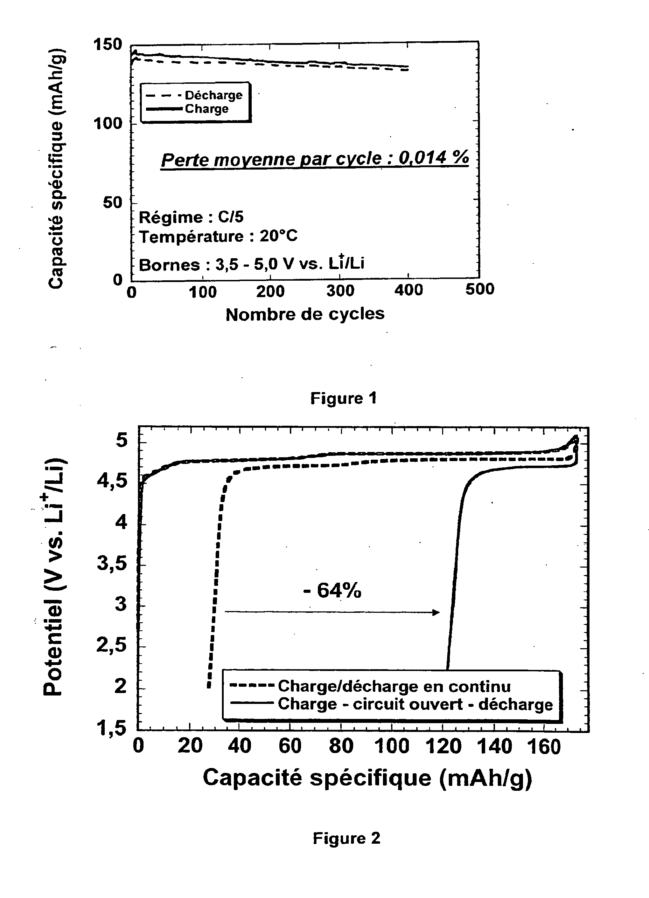

- la figure 1 est un graphique représentant la capacité en fonction du nombre de cycles d'un accumulateur au lithium comportant un électrolyte de l'art antérieur à base de LiPF₆ (1 mol/L) et une électrode positive en un matériau spinelle selon l'invention de formule LiNi_{0,4}Mn_{1,6}O₄ en mode intentiostatique (régime de C/5 c'est-à-dire charge (ou décharge) de la batterie en 5 heure; 20°C),
- la figure 2 est un graphique représentant la courbe en charge/décharge (régime de C/5 ; 20°C), avec ou sans période de 14 jours en circuit ouvert après la charge, d'accumulateurs comportant une électrode selon l'art antérieur en LiCoPO₄/Li et un électrolyte selon l'art antérieur à base de LiPF₆ (1mol/L),

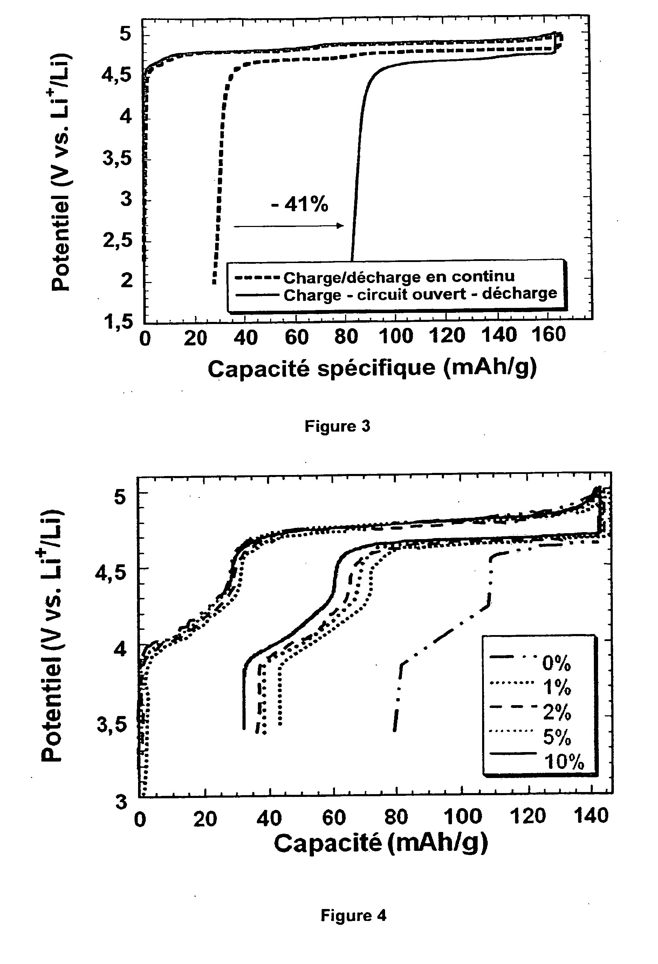

- la figure 3 est un graphique représentant la courbe de charge en mode intentiostatique (régime de C/5 ; 20°C) avec et sans période de 14 jours en circuit ouvert d'un accumulateur au lithium comportant un électrolyte selon l'invention à base de LiPF₆ (1mol/L) et contenant 2% en masse, par rapport à la masse totale d'électrolyte d'anhydride pentane-1,5-dicarboxylique et une électrode selon l'art antérieur en LiCoPO₄,
- la figure 4 est un graphique représentant la courbe de charge en mode intentiostatique (régime de C/5 ; 20°C) suivi d'un repos de 14 jours en circuit ouvert puis d'une décharge en mode intentiostatique (régime C/5 ; 20°C) d'accumulateurs au lithium comportant chacun une électrode selon l'invention en un matériau spinelle LiNi_{0,4}Mn_{1,6}O₄ et un électrolyte selon l'invention à base de LiPF₆ (1 mol/L) contenant des teneurs variables en anhydride butane-1,4-dicarboxylique ;

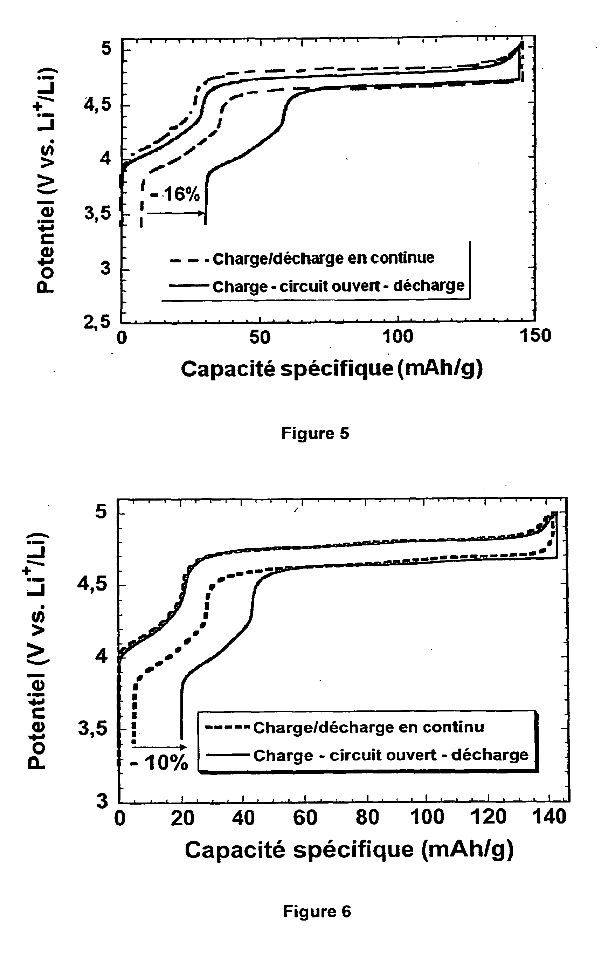

- la figure 5 est un graphique représentant les courbes de charge/décharge (régime C/5 ; 20°C), avec et sans période de 14 jours en circuit ouvert après la charge, un accumulateur au lithium comportant une électrode selon l'invention en un matériau spinelle LiNi_{0,4}Mn_{1,6}O₄ et un électrolyte selon l'invention à base de LiPF₆ (1mol/L) contenant 2% en poids, par rapport au poids total d'électrolyte, d'anhydride pentane-1,5-dicarboxylique, (hors invention) et
- la figure 6 est un graphique représentant les courbes de charge/décharge (régime C/5 ; 20°C), avec et sans période de 14 jours en circuit ouvert après la charge, d'un accumulateur au lithium comportant une électrode

selon l'invention en un matériau spinelle LiNi_{0,4}Mn_{1,6}O₄ et un électrolyte selon l'invention à base de LiPF₆ (1mol/L) contenant 2% en poids, par rapport au poids total d'électrolyte, l'anhydride 2-méthylène butane-1,4-dicarboxylique.

Les nombreux travaux de l'art antérieur portant sur les additifs d'électrolytes, visaient à améliorer la conductivité de l'électrolyte, ou de réduire son caractère inflammable ou encore de créer une protection contre la surcharge. En particulier, dans le cas où l'électrolyte créée une protection contre la surcharge, les additifs ajoutés dans l'électrolyte jouent un rôle de « fusible » afin que l'accumulateur considéré n'atteigne pas une tension trop élevée.

En contraste, l'invention propose de protéger l'interface électrode positive/électrolyte à tension élevée par l'ajout d'additif(s) spécifique(s) solubilisé(s) dans l'électrolyte. Pour cela l'additif ou le mélange d'additifs doit soit se décomposer au cours de la première charge de l'accumulateur et former un dépôt protecteur et stable à l'interface électrode positive / électrolyte (passivation *in situ* de l'électrode), ledit accumulateur étant alors stabilisé pour les cycles de charges/décharges à venir et pour les périodes en circuit ouvert (stockage), soit entraîner directement une modification de la limite de stabilité en potentiel de l'électrolyte sans forcément former de dépôt protecteur. Un tel additif est à utiliser en combinaison avec des matériaux d'électrode positive évoluant à tension élevée, et non avec des matériaux conventionnels dont la borne supérieure est en-deçà de 4,2-4,5 V vs. Li⁺/Li. Il s'agit en particulier des composés LiNi_{0,5}Mn_{1,5}O₄, LiNi_{0,4}Mn_{1,6}O₄, LiCoPO₄, LiNiPO₄, et des oxydes lamellaires de type Li(Li,Mn,Co,Ni)O₂. L'électrode négative peut être constituée par tous matériaux connus à cet effet (lithium, carbone, oxydes de titane, silicium,...). En particulier, dans le cadre de l'utilisation du couple électrode positive/électrolyte en mode haute tension, il est souhaitable que l'électrolyte se décompose avant que la tension appliquée ne porte atteinte à l'intégrité de l'électrode positive.

Ainsi, l'électrolyte utilisé dans l'invention peut comprendre soit un seul additif choisi parmi l'anhydride butane-1,4-dicarboxylique et l'anhydride 2-méthylène butane-1,4-dicarboxylique, soit ledit additif utilisé conjointement avec un autre additif tel qu'un autre anhydride carboxylique ou dicarboxylique, acide carboxylique ou dicarboxylique, cyclique ou acyclique, éventuellement substitué, ou bien tout autre additif tel qu'un sel de lithium, par exemple le bis(oxalato)borate de lithium (LiBOB). En effet, il est apparu au travers des expériences que le couplage d'un anhydride carboxylique et du LiBOB, également en tant qu'additif et non en tant que sel de lithium principal, permet d'obtenir des valeurs d'autodécharge plus réduites.

De tels électrolytes comprenant de tels additifs sont déjà connus mais il n'avait jamais été envisagé de les utiliser dans un accumulateur fonctionnant à un potentiel supérieur à 4,2 V vs. Li⁺/Li en raison du manque de stabilité de tel système.

Or, on a maintenant découvert que ce problème de stabilité est résolu dans l'invention dans l'invention par l'utilisation de ces additifs en combinaison avec une électrode positive en un matériau spinelle de formule (I) suivante, qui a un paramètre de maille compris entre 8,167 et 8,190 Å :

Li_{y}Ni_{0,5-x}Mn_{1,5+x}O_{4-δ} Formule (I)

dans laquelle :
0,9 < y ≤ 1,1 ;
0 ≤ x ≤ 0,1 et
δ ≥ 0.

La présente invention a donc pour objet un couple électrode positive/électrolyte d'accumulateur au lithium, l'électrolyte comprenant au moins un premier additif choisi parmi l'anhydride butane-1,4-dicarboxylique et l'anhydride 2-méthylène butane-1,4-dicarboxylique, et optionnellement un second additif qui est un sel de lithium, et la teneur totale en additif(s) de l'électrolyte étant supérieure ou égale à 0,01% en masse et inférieure ou égale à 30% en masse, par rapport à la masse totale d'électrolyte, et l'électrode positive étant en un matériau de structure spinelle ayant la formule (I) suivante :

Li_{y}Ni_{0,5-x}Mn_{1,5+x}O_{4-δ} Formule (I)

dans laquelle :
0,9 < ≤ 1,1 ;
0 ≤ x ≤ 0,1 ; et
δ ≥ 0,
ayant un paramètre de maille compris entre 8,167 et 8,190 Å.

De préférence, le matériau de structure spinelle de l'électrode positive du couple de l'invention a la formule (I) ci-dessus dans laquelle 0,5 ≥ δ ≥ 0.

Selon un mode de réalisation préféré de la présente invention, la teneur en additif(s) de l'électrolyte est supérieure à 1% en masse et inférieure ou égale à 15% en masse, de préférence est supérieure à 5% en masse et inférieure ou égale à 10% en masse, et le plus préférablement est de 10% en masse, par rapport à la masse totale d'électrolyte.

L'anhydride 2-méthylène butane-1,4-dicarboxylique est également appelé anhydride itaconique.

Selon un mode de réalisation préféré de la présente invention, ledit électrolyte utilisé dans l'invention comprend en outre un second additif qui est le bis(oxalato)borate de lithium (LiBOB) de formule LiBC₄O₈.

Dans encore un mode de réalisation préféré de la présente invention, l'électrode positive utilisée dans l'invention est en un matériau spinelle de formule (I) qui a un paramètre de maille compris entre 8,179 et 8,183 Å.

Un matériau d'électrode positive particulièrement préféré dans l'invention a la formule LiNi_{0,4}Mn_{1,6}O₄.

Les matériaux spinelles de formule (I) ainsi que leurs procédés de fabrication sont décrits dans la demande de brevet français n°2 890 241 A1.

Afin de mieux comprendre l'invention, on va en décrire ci-après des exemples non-limitatifs de mise en oeuvre mettant en évidence l'effet de différentes teneurs en anhydride butane-1,4-dicarboxylique et en anhydride 2-méthylène butane-1,4-dicarboxylique au sein d'un électrolyte d'un accumulateur au lithium, lorsque utilisé en combinaison avec une électrode positive en un matériau spinelle de formule (I).

Afin de tester l'efficacité des couples électrode positive/électrolyte de l'invention à limiter le problème d'autodécharge, des accumulateurs au lithium de format « pile bouton » ont été assemblés avec :
- une électrode négative de lithium (16 mm de diamètre, 135 µm d'épaisseur) déposé sur un disque de nickel servant de collecteur courant,
- une électrode positive constituée d'un disque de 14 mm de diamètre prélevée sur un film composite de 25 µm d'épaisseur comprenant le matériau LiNi_{0,4}Mn_{1,6}O₄ (80% en masse) préparé comme indiqué ci-dessous, de noir de carbone (10% en masse) en guise de matériau conducteur et de l'hexafluorure de polyvinylidène (10% en masse) en guise de liant, le tout étant déposé sur un collecteur de courant en aluminium (feuille de 20 µm d'épaisseur),
- un séparateur imbibé d'un électrolyte liquide à base du sel de LiPF₆ (1 mol/L) en solution dans un mélange de carbonate d'éthylène, de carbonate de propylène et de carbonate de diméthyle (rapport 1/1/3 en masse).

Afin de préparer le composé LiNi_{0,4}Mn_{1,6}O₄, un mélange intime de précurseurs à base de carbonates (8,168 g de carbonate de nickel, 6,261 g de carbonate de lithium, et 30,641 g de carbonate de manganèse) a été réalisé par broyage dans un broyeur planétaire de type Retsch dans un bol de 250 ml contenant 13 billes de 20 mm de diamètre et de 10,8 g chacune, durant 20 heures (4x5 heures) à 500 t/min, en présence d'hexane (poudre submergée). Un séchage d'une nuit à 55°C a été réalisé sur le mélange qui a ensuite été traité à 600°C (10 heures), puis à 900°C (15 heures) suivi d'un refroidissement à température ambiante à la vitesse de 1°C/min. La poudre a ensuite été placée en solution aqueuse (1 L) pendant 24 heures sous agitation magnétique. Un lavage à l'eau distillée a alors été effectué. Finalement un traitement thermique a été réalisé à 350°C pendant 3 heures et refroidi à la vitesse de 1°C/min.

Dans l'électrolyte, des teneurs de 0% à 18% en masse d'anhydride butane-1,4-dicarboxylique ou de 2% en masse d'anhydride de pentane-1,5-dicarboxylique (hors invention) ou d'anhydride 2-méthylène butane-1,4-dicarboxylique ont été ajoutées (au-delà le sel à 18% en masse ne se dissout plus).

Les caractéristiques électrochimiques de ces accumulateurs LiNi_{0,4}Mn_{1,6}O₄/Li ont été étudiées à haut potentiel (principalement au-dessus de 4,2 V vs. Li⁺/Li).

Les résultats sont reportés sur les figures 4 à 6, et au tableau 1 ci-après dans lequel les capacités spécifiques relevées sur les figures et les courbes en cyclage continu (charge/décharge à C/5 ; 20°C) sont reportées pour les différentes teneurs en anhydride butane-1,4-dicarboxylique et à une teneur de 2% en anhydride 2-méthylène butane-1,4-dicarboxylique au sein de l'électrolyte.

A titre d'exemple comparatif, on a testé dans les mêmes conditions un accumulateur au lithium de format pile-bouton comportant :
- la même électrode négative de lithium que précédemment,
- une électrode positive constituée d'un disque de 14 mm de diamètre prélevé sur un film composite de 25 µm d'épaisseur comprenant le matériau LiCoPO₄ (80% en masse) préparée comme à l'exemple précédent, de noir de carbone (10% en masse) en guise de matériau conducteur et de l'hexafluorure de polyvinylidène (10% en masse) en guise de liant, le tout étant déposé sur un collecteur de courant en aluminium (feuille de 20 µm d'épaisseur).

On a également testé, toujours à titre d'exemple comparatif, des accumulateurs au lithium comme ceux décrits précédemment c'est-à-dire, comportant une électrode positive en matériau LiNi_{0,4}Mn_{1,6}O₄ mais avec un électrolyte selon l'art antérieur à base de LiPF₆ (1 mol/L).

Les résultats sont reportés sur les figures 1 à 3 et au tableau 1 ci-dessous.

**Tableau 1**

| **Matériau électrode positif** | **Matériau additif** | **% massique d'additif** | **Capacité en décharge (cyclage continu) (mAg/h)** | **Capacité restituée en décharge après 14 jours en circuit ouvert (autodécharge) (mAg/h)** | **% d'autodécharge** |
|---|---|---|---|---|---|
| LiCoPO₄ * | - | 0% | 146 | 52 | 64 % |
| LiCoPO₄ * | anhydride pentane-1,5-dicarboxylique | 2% | 139 | 82 | 41 % |
| LiNi_{0,4}Mn_{1,6}O₄ | - | 0% | 137 | 62 | 54,8 % |
| LiNi_{0,4}Mn_{1,6}O₄ | anhydride butane-1,4-dicarboxylique | 1 % | 137 | 103 | 24,8 % |
| LiNi_{0,4}Mn_{1,6}O₄ | anhydride butane-1,4-dicarboxylique | 2% | 139 | 107 | 23 % |
| LiNi_{0,4}Mn_{1,6}O₄ | anhydride butane-1,4-dicarboxylique | 5% | 137 | 106 | 22,6 % |
| LiNi_{0,4}Mn_{1,6}O₄ | anhydride butane-1,4-dicarboxylique | 10% | 138 | 111 | 19,6 % |
| LiNi_{0,4}Mn_{1,6}O₄ | anhydride 2-méthylène butane-1,4-dicarboxylique | 2% | 138 | 124 | 10,1 % |

| | | | | | |
|---|---|---|---|---|---|
| * hors invention | | | | | |

On voit à partir de la figure 1 que l'utilisation d'une électrode positive en un matériau spinelle de formule LiNi_{0,4}Mn_{1,6}O₄, c'est-à-dire une électrode selon le couple de l'invention, mais avec un électrolyte conventionnel, LiPF₆, sans additif, permet d'obtenir un accumulateur dont la capacité est relativement stable en cyclage continu.

Cependant, comme on le voit à partir du tableau 1, un tel accumulateur a un pourcentage d'autodécharge de 54,8%.

Par ailleurs, on voit à partir des figures 2 et 3 qu'en utilisant une électrode positive en un matériau conventionnel, LiCoPO₄, l'ajout d'un électrolyte selon l'invention n'améliore que de 23 % le pourcentage d'autodécharge.

On voit à partir des figures 4 et 6 que lorsqu'on utilise le couple électrode positive/électrolyte selon l'invention, le pourcentage d'autodécharge est réduit de 5 à 10 fois par rapport à un autre couple électrode positive/électrolyte.

De plus, la figure 4 et le tableau 1 montrent l'excellent comportement en cyclage (faible perte de capacité par cycle) et en autodécharge (forte capacité restituée en circuit ouvert, faible autodécharge), des accumulateurs LiNi_{0,4}Mn_{1,6}O₄/Li comportant un électrolyte à base de LiPF₆ additionné de différentes teneurs (1%, 2%, 5%, 10%,) en anhydride butane-1,4-dicarboxylique. La diminution de l'autodécharge de ces accumulateurs correspond à une perte d'énergie moindre après une période de stockage à haute tension, et donc à un potentiel encore disponible supérieur.

On voit à partir du tableau 1 que plus la teneur en additif augmente, entre 0,01% et 10%, meilleurs sont les résultats en termes d'autodécharge tout en maintenant une bonne capacité en décharge d'accumulateur. Les meilleurs résultats sont ceux obtenus avec une teneur de 10% en masse d'anhydride butane-1,4-dicarboxylique dans l'électrolyte.

A l'image de l'additif mentionné précédemment, un ajout de 2% d'anhydride pentane-1,5-dicarboxylique (hors invention) permet également de réduire fortement l'autodécharge, avec un résultat encore supérieur En effet, comme on le voit en figure 5, la capacité obtenue en décharge d'un cyclage en continu de LiNi_{0,4}Mn_{1,6}O₄/Li est de 137 mAh/g. La capacité restituée en décharge après 14 accumulateur LiNi_{0,4}Mn_{1,6}O₄/Li, le pourcentage d'autodécharge est de seulement 16% après 14 jours.

On voit également à partir de la figure 6 que les meilleurs résultats sont obtenus lorsque l'additif est l'anhydride 2-méthylène butane-1,4-dicarboxylique.

Bien que dans les exemples qui précèdent, les additifs utilisés au sein de l'électrolyte sont l'anhydride butane-1,4-dicarboxylique, l'anhydride pentane-1,5-dicarboxylique (hors invention) et l'anhydride 2-méthylène butane-1,4-dicarboxylique, la diminution du pourcentage d'autodécharge ne se limite pas aux accumulateurs au lithium comportant un électrolyte réalisé à partir de l'un de ces additifs, bien évidemment en combinaison avec une électrode positive en un matériau tel que défini précédemment. Des électrolytes préparés à partir d'autres additifs décrits dans l'invention, en combinaison avec une électrode positive en un matériau spinelle (de structure spinelle) de formule (I), ont permis de réaliser différents accumulateurs au lithium fonctionnant à un potentiel supérieur à 4,2 V vs Li⁺/Li présentant les caractéristiques électrochimiques ci-dessus.

En outre, bien que dans les exemples qui précèdent, l'électrolyte de l'accumulateur au lithium utilisé est principalement à base de LiPF₆, d'autres sels de lithium tels que LiClO₄, LiAsF₆, LiBF₄, LiR_{F}SO₃, LiCH₃SO₃, LiN(R_{F}SO₂)₂, LiC(R_{F}SO₂)₃ (R_{F} étant choisi parmi un atome de fluor et un groupement perfluoroalkyle comportant entre un et huit atomes de carbone), lithium trifluorométhanesulfonylimide (LiTFSI), lithium bis(oxalato)borate (LIBOB), lithium bis(perfluoroéthylsulfonyl)imide (LiBETI), fluoroalkylphosphate de lithium (LiFAP)] peuvent être utilisés. Le sel de lithium est de préférence dissous dans un solvant polaire aprotique et peut être supporté par un élément séparateur disposé entre les deux électrodes ; l'élément séparateur étant alors imbibé d'électrolyte. Dans le cas d'un accumulateur au lithium à électrolyte polymère, le sel de lithium n'est pas dissous dans un solvant organique, mais dans un composite polymère solide tel que le POE (polyoxyde d'éthylènè), le PAN (polyacrylonitrile), le PMMA (polyméthacrylate de méthyle), le PVdF, (polyfluorure de vinylidène), le PVC (polychlorure de vinyle) ou un de leurs dérivés.

## Revendications

1. Couple électrode positive/électrolyte pour accumulateur au lithium **caractérisé en ce que** :
l'électrode positive est en un matériau de structure spinelle de formule (I) suivante et a un paramètre de maille compris entre 8,167 et 8,190 Å :
Li_{y}Ni_{0,5-x}Mn_{1,5+x}O_{4-δ} Formule (I)
dans laquelle :
0,9 < y ≤ 1,1 ;
0 ≤ x ≤ 0,1 et
δ ≥ 0,
et en ce que :
l'électrolyte est une solution d'un sel de lithium comprenant au moins un premier additif choisi parmi l'anhydride butane-1,4-dicarboxylique et l'anhydride 2-méthylène butane-1,4-dicarboxylique.

2. Couple selon la revendication 1 **caractérisé en ce que** la teneur totale en additif(s) de l'électrolyte est supérieure ou égale à 0,01% en masse et inférieure ou égale à 30% en masse, par rapport à la masse totale d'électrolyte.

3. Couple selon la revendication 1 ou 2, **caractérisé en ce que** la teneur totale en additif(s) de l'électrolyte est supérieure à 1% en masse et inférieure ou égale à 15% en masse, par rapport à la masse totale d'électrolyte.

4. Couple selon l'une quelconque des revendications précédentes, **caractérisé en ce que** la teneur totale en additif(s) de l'électrolyte est supérieure à 5% en masse et inférieure ou égale à 10% en masse, par rapport à la masse totale d'électrolyte.

5. Couple selon l'une quelconque des revendications précédentes, **caractérisé en ce que** la teneur totale en additif(s) de l'électrolyte est de 10% en masse, par rapport à la masse totale d'électrolyte.

6. Couple selon l'une quelconque des revendications précédentes, **caractérisé en ce que** l'électrolyte comprend, en outre, un second additif qui est le bis(oxalato)borate de lithium (LiBOB), de formule LiBC₄O₈.

7. Couple selon l'une quelconque des revendications précédentes, **caractérisé en ce que** l'électrode positive est en un matériau de structure spinelle de formule (I) telle que définie en revendication 1 et a un paramètre de maille compris entre 8,179 et 8,183 Å.

8. Couple selon l'une quelconque des revendications précédentes, **caractérisé en ce que** l'électrode positive est en un matériau de structure spinelle de formule LiNi_{0,4}Mn_{1,6}O₄.

9. Accumulateur au lithium **caractérisé en ce qu'**il comprend un couple électrode positive/électrolyte selon l'une quelconque des revendications précédentes.

## Patentansprüche

1. Positive Elektrode/Elektrolyt-Paar für eine Lithiumbatterie, **dadurch gekennzeichnet, dass**:
die positive Elektrode aus einem Material mit Spinell-Struktur der folgenden Formel (I) ist und einen Gitterparameter zwischen 8,167 und 8,190 Å hat:
Li_{y}Ni_{0,5-x}Mn_{1,5+x}O_{4-δ} Formel (I)
in der:
0,9 < y ≤ 1,1;
0 ≤ x ≤ 0,1 und
δ ≥ 0,
und dadurch, dass:
der Elektrolyt eine Lösung eines Lithiumsalzes ist, der wenigstens ein erstes Additiv, ausgewählt aus Butan-1,4-dicarbonsäureanhydrid und 2-Methylenbutan-1,4-dicarbonsäureanhydrid, umfasst.

2. Paar gemäß Anspruch 1, **dadurch gekennzeichnet, dass** der Gesamtgehalt an Additiv (Additiven) des Elektrolyten über oder gleich 0,01 Masse-% und unter oder gleich 30 Masse-%, bezogen auf die Gesamtmasse des Elektrolyten, ist.

3. Paar gemäß Anspruch 1 oder 2, **dadurch gekennzeichnet, dass** der Gesamtgehalt an Additiv (Additiven) des Elektrolyten über 1 Masse-% und unter oder gleich 15 Masse-%, bezogen auf die Gesamtmasse des Elektrolyten, ist.

4. Paar gemäß einem der vorangehenden Ansprüche, **dadurch gekennzeichnet, dass** der Gesamtgehalt an Additiv (Additiven) des Elektrolyten über 5 Masse-% und unter oder gleich 10 Masse-%, bezogen auf die Gesamtmasse des Elektrolyten, ist.

5. Paar gemäß einem der vorangehenden Ansprüche, **dadurch gekennzeichnet, dass** der Gesamtgehalt an Additiv (Additiven) des Elektrolyten 10 Masse-%, bezogen auf die Gesamtmasse des Elektrolyten, ist.

6. Paar gemäß einem der vorangehenden Ansprüche, **dadurch gekennzeichnet, dass** der Elektrolyt außerdem ein zweites Additiv umfasst, das Lithium-bis(oxalato)borat (LiBOB) der Formel LiBC₄O₈ ist.

7. Paar gemäß einem der vorangehenden Ansprüche, **dadurch gekennzeichnet, dass** die positive Elektrode aus einem Material mit Spinell-Struktur der Formel (I), wie in Anspruch 1 definiert, ist, und einen Gitterparameter von zwischen 8,179 und 8, 283 Å hat.

8. Paar gemäß einem der vorangehenden Ansprüche, **dadurch gekennzeichnet, dass** die positive Elektrode aus einem Material mit Spinell-Struktur der Formel LiNi_{0,4}Mn_{1,6}O₄ ist.

9. Lithiumbatterie, **dadurch gekennzeichnet, dass** sie ein positive Elektrode/Elektrolyt-Paar gemäß einem der vorangehenden Ansprüche umfasst.

## Claims

1. Positive electrode/electrolyte pair for a lithium battery, **characterised in that**:
the positive electrode is made from a material with a spinel structure based on formula (I) below and has a lattice parameter of between 8.167 and 8.190 Δ:
Li_{y}Ni_{0,5-x}Mn_{1,5+x}O_{4-δ} Formula (I)
in which:
0.9 < y ≤ 1.1;
0 ≤ x ≤ 0.1; and
δ ≤ 0,
and in that:
the electrolyte is a solution of a lithium salt comprising at least a first additive selected from butane-1,4-dicarboxylic anhydride and 2-methylene butane-1,4-dicarboxylic anhydride.

2. Pair as claimed in claim 1, **characterised in that** the total content of additive(s) in the electrolyte is greater than or equal to 0.01% by weight and less than or equal to 30% by weight, relative to the total weight of electrolyte.

3. Pair as claimed in claim 1 or 2, **characterised in that** the total content of additive(s) in the electrolyte is greater than 1% by weight and less than or equal to 15% by weight, relative to the total weight of electrolyte.

4. Pair as claimed in any one of the preceding claims, **characterised in that** the total content of additive(s) in the electrolyte is greater than 5% by weight and less than or equal to 10% by weight, relative to the total weight of electrolyte.

5. Pair as claimed in any one of the preceding claims, **characterised in that** the total content of additive(s) in the electrolyte is 10% by weight, relative to the total weight of electrolyte.

6. Pair as claimed in any one of the preceding claims, **characterised in that** the electrolyte further comprises a second additive, which is lithium bis(oxalato)borate (LiBOB), having formula LiBC₄O₈.

7. Pair as claimed in any one of the preceding claims, **characterised in that** the positive electrode is made from a material with a spinel structure based on formula (I) as defined in claim 1 and has a lattice parameter of between 8.179 and 8.183 Δ.

8. Pair as claimed in any one of the preceding claims, **characterised in that** the positive electrode is made from a material with a spinel structure based on formula LiNi_{0,4}Mn_{1,6}O₄.

9. Lithium battery **characterised in that** it comprises a positive electrode/electrolyte pair as claimed in any one of the preceding claims.
